# EUROPEAN PATENT SPECIFICATION

(11) **EP 2 184 504 B1**
(45) Date of publication and mention of the grant of the patent: **29.05.2013**
(21) Application number: 09175123.0
(22) Date of filing: 05.11.2009
(51) Int. Cl.: F16D 41/067

(54) **One-way clutch and pulley apparatus incorporating such one-way clutch**
Einwegkupplung und Scheibenvorrichtung mit einer solchen Einwegkupplung
Embrayage unidirectionnel et appareil à poulie intégrant ledit embrayage unidirectionnel

(30) Priority: 05.11.2008 JP 2008284282; 21.11.2008 JP 2008298196
(43) Date of publication of application: 12.05.2010
(73) Proprietor: NSK Ltd., Tokyo 141-8560 (JP)
(72) Inventor: Mori, Hirofumi c/o NSK Ltd.,, Fujisawa-shi Kanagawa 251-8501 (JP); Uematsu, Hiroshi c/o NSK Ltd.,, Fujisawa-shi Kanagawa 251-8501 (JP); Hara, Yoshiteru c/o NSK Ltd.,, Fujisawa-shi Kanagawa 251-8501 (JP)
(74) Representative: Grünecker, Kinkeldey, Stockmair & Schwanhäusser

(56) References cited:
- EP-A- 2 034 207
- JP-A- 7 317 809
- US-A- 2 827 991
- US-A1- 2005 087 417

## Description

### TECHNICAL FIELD

The present invention relates to a one-way clutch and a pulley apparatus incorporating such one-way clutch therein. More specifically, the invention relates to a one-way clutch and a pulley apparatus incorporating such one-way clutch therein which, when in use, are fixed to an input shaft of an auxiliary machine such as an alternator which can be driven by the power of the crank shaft of an engine or to the output shaft of a starter motor applying power to the crank shaft of the engine.

### BACKGROUND ART

Conventionally, various auxiliary machines are driven with a car driving engine as the drive source thereof. For example, when an alternator is driven to generate necessary power for starting-up of a car, a pulley apparatus having a built-in one-way clutch is used. As a one-way clutch which is used in such clutch built-in pulley apparatus, a one-way clutch of a roller type which, as disclosed in the patent reference 1, includes an engaging member made of a roller and incorporated between an outer ring and an inner ring, or one-way clutch of a sprag type which, as disclosed in the patent reference 2, includes an engaging member made of a sprag and incorporated between an outer ring and an inner ring.

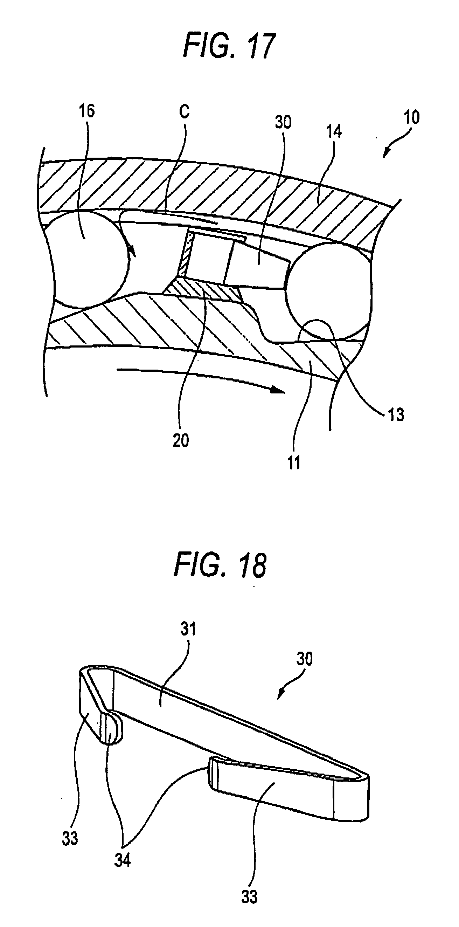

For example, Fig. 17 shows an example of a one-way clutch of a roller type. The one-way clutch 10 includes an inner ring 11 having a cam surface in order to provide a wedge space between the inner ring 11 and an outer ring 14. Rollers 16 disposed in the wedge space are respectively stored in multiple pockets formed in a retainer 20. When the inner ring 11 and the outer ring 14 tend to rotate relative to each other in one direction in a peripheral direction, the rollers 16 are locked due to the wedge action of the wedge space. On contrary, when the two rings tend to rotate relative to each other in the other direction, the engagement thereof is removed so that they get into an over-run state. The rollers 16 are pressed elastically in the wedge action working direction, that is, in the locking direction due to a spring member 30 secured to the retainer 20.

A spring member 30 shown in Fig. 18 includes a base portion 31, a pair of pressing portions 33 which are respectively disposed on the both sides of the base portion 31 in the longitudinal direction of the spring member 30 and are bent with respect to the base portion 31, and a pair of contact portions 34 which are disposed on end portions of the pressing portions 33 and are bent with respect to the pressing portions 33 and are in contact with the rollers 16.

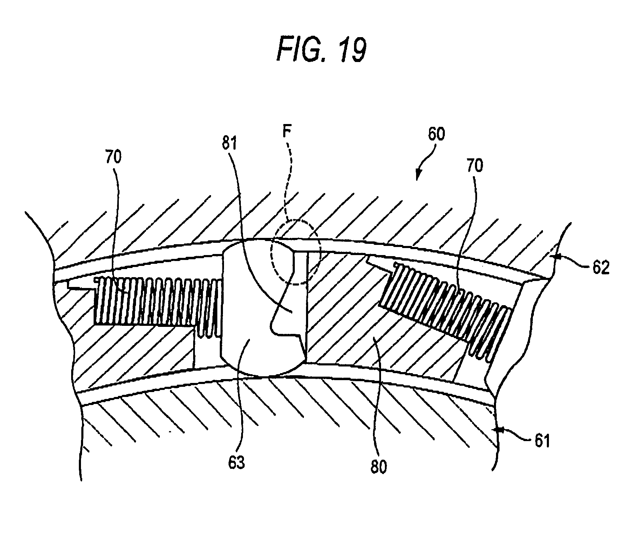

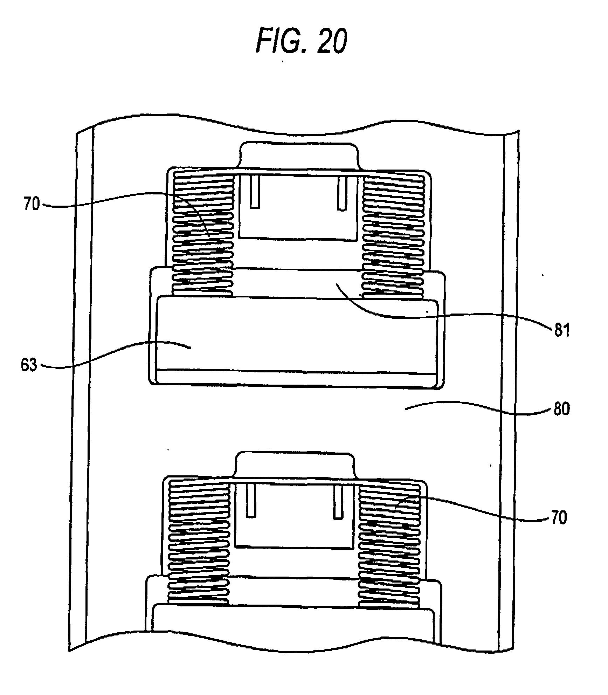

Next, Figs. 19 and 20 show an example of a one-way clutch of a sprag type. In this one-way clutch 60, a retainer 80 is interposed between an inner ring 61 and an outer ring 62. In the peripheral direction of the retainer 80, there are formed multiple pockets 81. And, in the multiple pockets 81, there are disposed sprags 63 respectively. When the inner ring 61 and the outer rings 62 to rotate relative to each other in one direction of a peripheral direction, sprags 63 is engaged with the outer surface of the inner ring 61 and the inner surface of the outer ring 62, whereby the sprags 63 are locked. On contrary, when the two rings tend to rotate relative to each other in the other direction, the engagement thereof is removed, whereby they get into an over-run state. The sprags 63 are elastically pressed in a locking direction due to spring member 70 which are respectively secured to the retainer 80.

Here, in such one-way clutch of a roller type as shown in Fig. 17, when the one-way clutch 10 is in an over-run state, grease sticking to the inner peripheral surface of the outer ring 14 is firstly contacted with the roller 16 and is thereby scraped up (see the arrow mark C shown in Fig. 17), with the result that the grease collects between the roller 16 and the back surface of the spring 30.

Since this grease collecting portion exists in a moving direction of the roller 16 when the one-way clutch 10 is engaged next, the grease obstructs the movement of the roller 16. Especially, in a low temperature, since the consistency of the grease reduces, the resistance of the grease obstructing the movement of the roller 16 increases. Therefore, the improvement of the engaging performance of the one-way clutch is required.

Also, in such one-way clutch of a sprag type as shown in Fig. 19, in the over-run state of the one-way clutch 60, since the grease sticking to the inner peripheral surface of the outer ring 62 is firstly in contact with the sprag 63 and is thereby scraped by the sprag 63, the grease collects between the sprag 63 and retainer 80 (see the F mark shown in Fig. 19).

Since this grease collecting portion exists in the moving direction of the sprag 63 when the one-way clutch 60 is engaged next, the grease obstructs movement of the sprag 63. Especially, in a low temperature, since a consistency of the grease reduces, the resistance of the grease obstructing the movement of the sprag 63. Therefore, the improvement of the engaging performance of the one-way clutch is required.

The present invention is achieved in view of the above circumstances, an object of the invention to provide an excellent engaging property of one-way clutch and a one-way clutch built-in pulley apparatus.

Patent Reference 1: Japanese Patent Unexamined Publication No. 2007-198582

Patent Reference 2: Japanese Patent Unexamined Publication No. 2006-177523

A further prior art one way clutch is known from US-A-2005/0087417.

### SUMMARY OF INVENTION

The above object of the invention can be attained by the following aspects.
(1) A one-way clutch includes an inner member, an outer member disposed rotatably relative to the inner member, multiple engaging members respectively interposed between an outer peripheral surface of the inner member and an inner peripheral surface of the outer member, a retainer holding the multiple engaging members, and a spring member being secured to the retainer and pressing against the respective engaging members to press the engaging members in a direction in which the engaging members are engaged, wherein the one-way clutch further includes a grease scraping portion which scrapes grease sticking to the inner peripheral surface of the outer member, when the inner member and the outer member are rotated relative to each other.
(2) The one-way clutch as set forth in (1), wherein the grease scraping portion is formed on the spring member.
(3) The one-way clutch as set forth in (2), wherein the spring member has a plate spring, the plate spring includes: a base portion formed on an intermediate region in a longitudinal direction of the plate spring and secured to the retainer; and a pair of pressing portions respectively formed on both sides of the plate spring in the longitudinal direction of the spring member and pressing against the multiple engaging members in the engaging direction thereof, and the grease scraping portion is formed in the base portion so as to protrude in the radial direction.
(4) The one-way clutch as set forth in (1), wherein the grease scraping portion is formed on the retainer.
(5) The one-way clutch as set forth in (4), wherein the retainer includes: a pair of ring portions; and multiple pillar portions which connect the pair of ring portions and which are secured to the spring member, and the grease scraping portion is formed on an outer peripheral surface of the pillar portions so as to protrude in the radial direction.
(6) A one-way clutch built-in pulley apparatus includes: a sleeve in which to insert a rotation shaft; a pulley disposed concentrically with the sleeve and outward of the sleeve and; a one way clutch as set forth in any one of (1) to (5), which is interposed between an outer peripheral surface of the sleeve and an inner peripheral surface of the pulley, and which transmits a rotation force between the pulley and the sleeve when one of the pulley and the sleeve rotates relative to the other; and a support bearing which is interposed between the outer peripheral surface of the sleeve and the inner peripheral surface of the pulley at a position axially spaced from the one-way clutch, for allowing relative rotation between the pulley and the sleeve while supporting a radial load applied to the pulley.

A one-way clutch and a one-way clutch built-in pulley apparatus according to the invention have a grease scraping portion in spring members or a retainer which, in an over-run state where an inner member and an outer members are allowed to rotate relative to each other, can scrape grease sticking to an outer peripheral surface of the inner member or an inner peripheral surface of the outer member. This makes it possible to reduce an amount of grease staying between an engaging members and the spring members or between the engaging members and the retainer in the over-run state, thereby the resistance that blocks the movements of the engaging members when they are engaged is reduced. That is, the engaging performance of the clutch can be enhanced.

### BRIEF DESCRIPTION OF THE DRAWINGS

Fig. 1 shows a longitudinal section view of a roller type one-way clutch built-in pulley apparatus according to a first embodiment of the invention.
Fig. 2 shows a partially cut-away perspective view of a retainer with a spring included in a roller type one-way clutch shown in Fig. 1.
Fig. 3 shows a perspective view of the spring included in the roller type one-way clutch shown in Fig. 1.
Fig. 4 shows a section view of the roller type one-way clutch shown in Fig. 1.
Fig. 5 shows a perspective view of a spring shown in a modification of the roller type one-way clutch according to the first embodiment of the invention.
Fig. 6 shows a perspective view of a spring shown in a roller type one-way clutch according to a second embodiment of the invention.
Fig. 7 shows a top plan view of a spring and roller employed in the roller type one-way clutch shown in Fig. 6.
Fig. 8 shows a section view taken along the VIII-VIII shown in Fig. 7. Specifically, Fig. 8A shows the opened state of the spring, while Fig. 8B shows the compressed state of the spring.
Fig. 9 shows a longitudinal section view of a sprag type one-way clutch built-in pulley apparatus according to a third embodiment of the invention.
Fig. 10 shows a section view of the sprag type one-way clutch shown in Fig. 9.
Fig. 11 shows a top plan view of such portion of the sprag type one-way clutch shown in Fig. 9 as exists inside an outer ring.
Fig. 12 shows a top plan view of such portion of a sprag type one-way clutch built-in pulley apparatus according to a fourth embodiment of the invention as exists inside an outer ring.
Fig. 13 shows a top plan view of such portion of a sprag type one-way clutch built-in pulley apparatus according to a fifth embodiment of the invention as exists inside an outer ring.
Fig. 14 shows a top plan view of such portion of a sprag type one-way clutch built-in pulley apparatus according to a sixth embodiment of the invention as exists inside an outer ring.
Fig. 15 shows a top plan view of such portion of a sprag type one-way clutch built-in pulley apparatus according to a seventh embodiment of the invention as exists inside an outer ring.
Fig. 16 shows top plan view of such portion of a sprag type one-way clutch built-in pulley apparatus according to a modification of the seventh embodiment of the invention as exists inside an outer ring.
Fig. 17 shows a section view of a conventional roller type one-way clutch.
Fig. 18 shows a perspective view of a spring used in the conventional roller type one-way clutch.
Fig. 19 shows a section view of a conventional sprag type one-way clutch.
Fig. 20 shows a perspective view of a spring used in the conventional sprag type one-way clutch.

### BEST MODE FOR CARRYING OUT THE INVENTION

The invention will be specifically described with reference to following embodiments and figures, but the invention should not be restricted thereto.

### [First Embodiment]

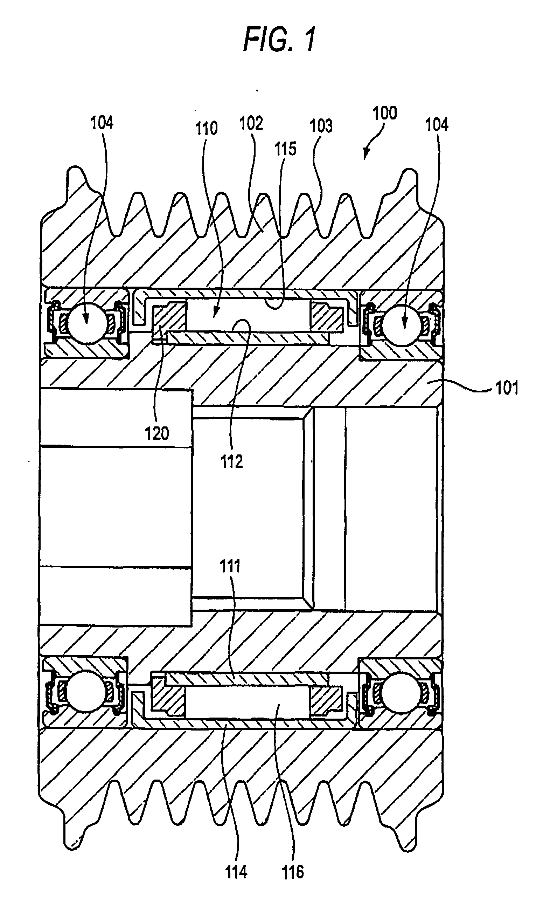

Firstly, a first embodiment will be specifically described with reference to Figs. 1 to 4. As shown in Fig. 1, a pulley apparatus 100 incorporating therein a one-way clutch of a roller type includes: a sleeve 101 in which to insert a rotation shaft (not shown) of an auxiliary machine such as an alternator by screwing; and a pulley 102 having a belt groove 103 formed on the outer peripheral surface thereof disposed concentrically with the sleeve 101 and outward of the sleeve 101. On the belt groove 103, there is provided a drive belt (not shown) which is hung across a drive pulley (not shown) fixed to a crank shaft of an engine.

Also, a one-way clutch 110 of a roller type is interposed between an outer peripheral surface of an intermediate portion of the sleeve 101 in an axial direction of the sleeve 101 and an inner peripheral surface of an intermediate portion of the pulley 102 in the axial direction of the sleeve 101. In the following passage of this specification, the terms of "axial direction" and "radial direction" indicate "axial direction of sleeve" and "radial direction of sleeve", respectively. On both sides across the one-way clutch 110 in the axial direction, that is, between the outer peripheral surfaces of both end portions in the axial direction of the sleeve 101 and the inner peripheral surfaces of both end portions of the pulley 102 in the axial direction, a pair of rolling bearings 104 are interposed. In the one-way clutch 110, only when the pulley 102 tends to rotate relative to the sleeve 101 in a given direction, the rotation force between the pulley 102 and sleeve 101 can be transmitted. The rolling bearings 104, while supporting a radial load applied to the pulley 102, allows relative rotation between the sleeve 101 and pulley 102.

The one-way clutch 110 includes an inner ring 111 serving as an inner member which is pressed against and fixed to the outer peripheral surface of the sleeve 101, an outer ring 114 serving as an outer member which is pressed against and fixed to the inner peripheral surface of the pulley 102 rotatably relative to the inner ring 111, and multiple rollers 116 serving as engaging members which are respectively interposed between the outer peripheral surface of the inner ring 111 and the inner peripheral surface of the outer ring 114. The outer peripheral surface of the inner ring 111 provides a cam surface on which multiple ramp portions 112 are formed at given intervals in the circumferential direction thereof. The rollers 116 are rotatably held in a wedge space which is formed by a cylindrical surface 115 of the outer ring 114 and the respective ramp portions 112.

Also, the one-way clutch 110 includes a retainer 120 having multiple pockets respectively storing the rollers 116 separately, and a spring 130 pressing elastically against the respective rollers 116 in a direction in which the rollers 116 are engaged.

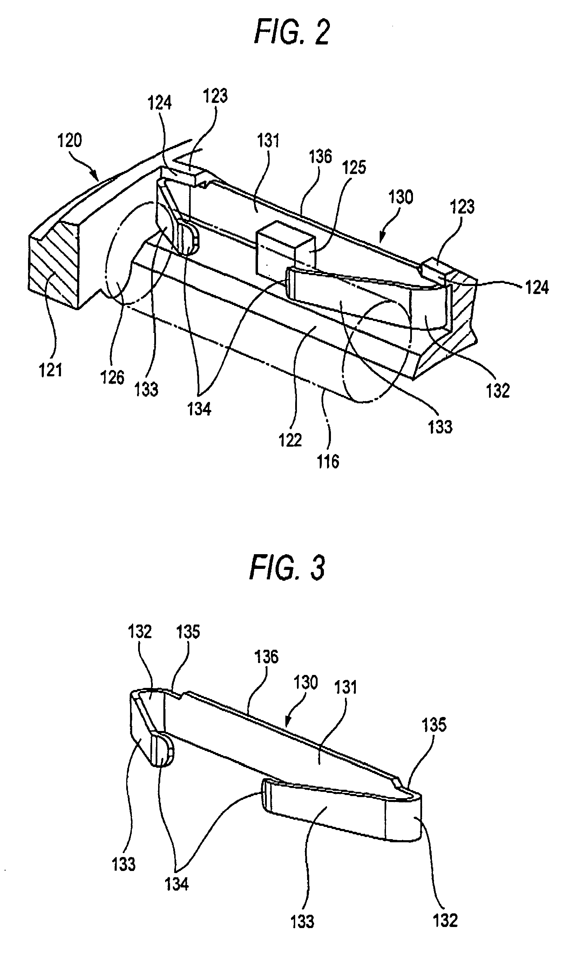

As shown in Fig. 2, the retainer 120 includes a pair of ring portions 121 and multiple pillar portions 122 connecting the pair of ring portions 121. In an inner peripheral of the pair of ring portions 121, protruding portions 126 which engage with the both edge portions of the ramp portions 112 are formed, the retainer 120 is allowed to rotate integrally with the inner ring 111 and sleeve 101. Also, on portions of the inner side surfaces of the pair of ring portions 121 corresponding to the respective pillar portions 122 in the circumferential direction, there are provided a pair of end-portion-side spring holding portions 123 so as to protrude outwardly in the radial direction from the outer peripheral surface side of the respective pillar portions 122. Also, in a central portion of each pillar portion 122 in the axial direction, a center-side spring holding portion 125 is formed so as to protrude outwardly in the radial direction from the outer peripheral surface side of each pillar portion 122. The spring 130 is put between one side surface of the end-portion-side spring holding portion 123 in the circumferential direction and the other side surface of the center-side spring holding portion 125 in the circumferential direction. Also, on the outside diameter side of the end-portion-side spring holding portion 123, an extension portion 124 which extends in the peripheral direction is formed; and the extension portion 124 prevents the spring 130 from slipping off outwardly in the radial direction.

As shown in Figs. 2 and 3, the spring member 130 is made of a plate spring. The spring 130 includes: a base portion 131 which is intermediate part of the spring 130 in a longitudinal direction; a pair of pressing portion 133 which are respectively disposed on both sides of the base portion in the longitudinal direction and are bent with respect to the base portion 131; and a pair of contact portions 134 which are disposed on end portions of the pressing portions and are further bent with respect to the pressing portions 133 and contacts the rollers 116. Also, the portion which of the base portion 131 is bent with respect to the base portion 131 serves as a bent portion 132. Owing to this structure, the spring 130 contacts with the rollers 116 at the contact portions 134, and presses against the rollers 116 in a direction in which the rollers are locked, that is, presses them toward a shallow groove sides of the ramp portion 112.

Also, the base portion 131 of the spring member 130 includes a pair of securing portions 135 whose both end portions are secured to the extension portions 124 of the end-portion-side spring holding portions 123, and a grease scraping portion 136 which is interposed between the pair of securing portions 135, protrudes outwardly in the radial direction from securing portions 135 and, in the over-run state, scrapes grease sticking to the inner peripheral surface of the outer ring 114.

In the thus structured one-way clutch built-in pulley apparatus 100, when the rotational angular velocity of the pulley 102 is faster than the rotational angular velocity of the rotation shaft, that is, when the outer ring 114 rotate relative to the inner ring 111 in a given direction, the rollers 116 are locked into the wedge space between the cylindrical surface of the outer ring 114 and the ramp portions 112 of the inner ring 111 due to the wedge action. Therefore, the rotation force is transmitted between the outer ring 114 and the inner ring 111 through the respective rollers 116. As a result of this, the pulley 102 and sleeve 101 are locked and are thus unable to rotate relative to each other, whereby the rotation force of an engine is transmitted to the rotation shaft. On the other hand, when the rotational angular velocity of the pulley 102 is slower than the rotational angular velocity of the rotation shaft, the locked states of the rollers 116 are removed, thereby providing the over-run state in which the relative rotation between the pulley 102 and sleeve 101 is allowed.

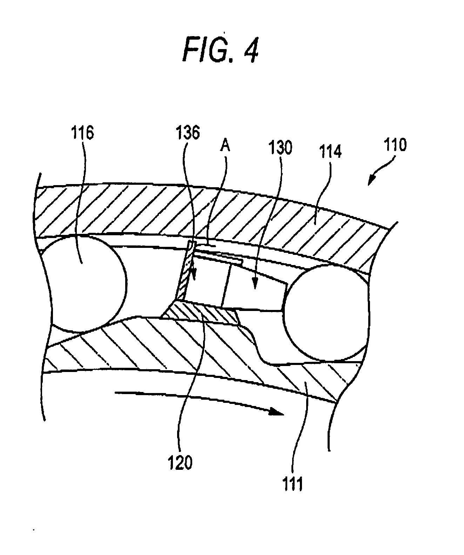

In the over-run state, the inner ring 111 and the outer ring 114 are also allowed to rotate relative to each other. The spring 130, which rotates with the inner ring 111 through the retainer 120, scrapes grease sticking to the inner peripheral surface of the outer ring 114 with the grease scraping portion 136 (see the arrow mark A shown in Fig. 4). That is, in the over-run state, the grease sticking to the inner peripheral surface of the outer ring 114 is prevented from contacting with the rollers 116 firstly, thereby the amount of the grease which collects between the rollers 116 and the back surface of the spring 130 can be reduced. This makes it possible to reduce the resistance that blocks the movements of the rollers 116 in the lock state, thereby an engaging performance of the clutch is improved.

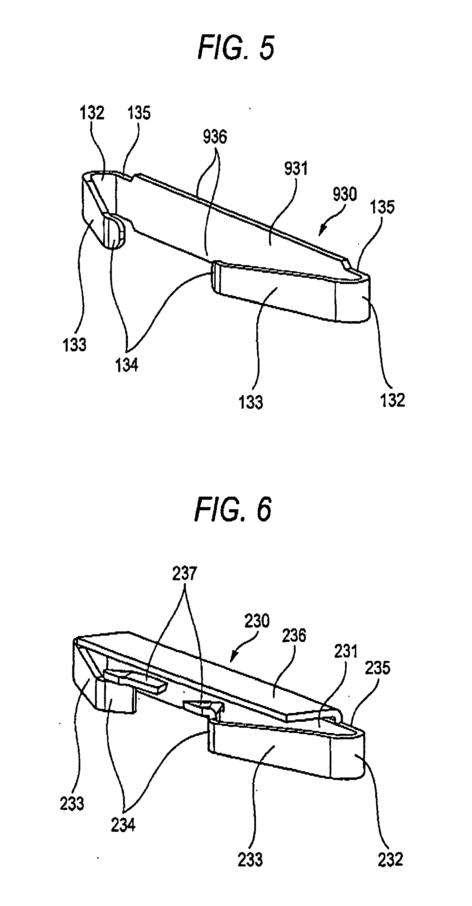

Here, as a modification example of the spring 130 according to the first embodiment, as shown in Fig. 5, a grease scraping portion 936 may be formed on the both sides of a base portion 931 in the radial direction. In this case, the spring 930 is symmetric in shape, therefore, the spring 930 can be inserted into the retainer 120 regardless of the inserting direction thereof, and the assembling efficiency of the clutch is enhanced. Also, the grease scraping portions 936 can be extended outwardly in the radial direction from the outer peripheral surface of the retainer 120, if the extension thereof does not contact with the inner peripheral surface of the outer ring 114.

### [Second Embodiment]

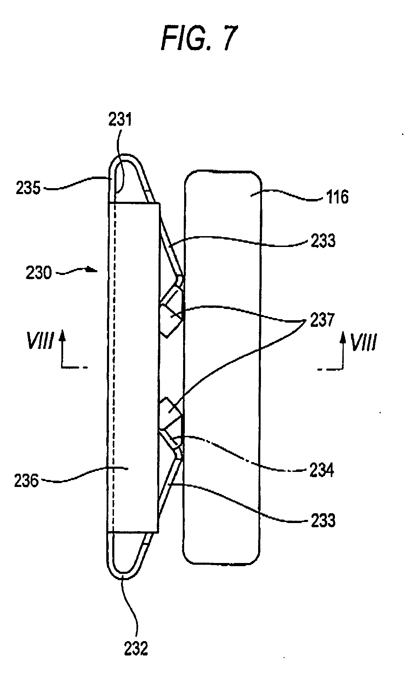

Next, a second embodiment will be specifically described with reference to Figs. 6 to 8. Here, the present embodiment is similarly to the first embodiment, and relates to a one-way clutch of a roller type and a pulley apparatus having a built-in one-way clutch of a roller type. The present embodiment is different from the first embodiment only in the shape of the spring of the one-way clutch, and the other portions of the present embodiment are equivalent to those of the first embodiment. Thus, the description of the equivalent portions is omitted or simplified here.

As shown in Figs. 6 to 8, a spring member 230 according to the present embodiment is made of a plate spring. The spring member 230 includes: a base portion 231 which is an intermediate portion of the spring member 230; a pair of pressing portions 233 respectively disposed on the both end sides portion in the longitudinal direction of the base portion 231 and bent with respect to the base portion 231; a pair of contact portion 234 which are disposed on end portions of a pressing portion 233, are further bent with respect to the pressing portions 233 and contact with the rollers 116. Also, the portion of the base portion 231 which is bent with respect to the base portion 231 serves as a bent portion 232. Owing to this structure, the spring member 230, while the contact portions 234 are in contact with the respective rollers 116, presses against the rollers 116 in a direction in which the rollers 116 are locked, that is, toward the shallow groove sides of the respective ramp portions 112.

Also, the base portion 231 of the spring member 230 includes: a pair of securing portions 235 respectively formed in the both end portions of the base portion 231 to be secured to the extension portions 124 of the end-portion-side spring holding portions 123; and a grease scraping portion 236 formed as a substantially flat-like portion. Specifically, between the pair of securing portions 235, the grease scraping portion 236 protrudes from the securing portions 235 outwardly in the radial direction and is then bent substantially at right angles toward the front (toward the contact portion side) of the spring member 230, and the grease scraping portion 236 scrapes grease sticking to the inner peripheral surface of the outer ring 114 in the over-run state. Also, outwardly in the radial direction from the contact portions 234 of the spring member 230, a pair of grease guide portions 237 is formed as flat-shaped portions which are produced by bending the contact portions 234 forwardly of the spring member 230, that is, toward the rollers 116. The grease guide portions 237 are respectively formed as flat plates each having such length as it can prevent the grease guide portions 237 from being in contact with the rollers 116 and also, when the spring member 230 is deformed by the rollers 116, it can prevent the grease guide portions 237 from being in contact with the base portion 231. Also, in order that the pressing portions 233 are formed gradually narrower in width toward the contact portions 234, the outer surfaces thereof in the radial direction are formed in a tapered manner. Owing to this structure, the grease guide portions 237 extending from the contact portions 234, even when the spring member 230 is deformed by the rollers 116, are allowed to move substantially in parallel to the grease scraping portions 236 inwardly thereof in the radial direction without being in contact with the grease scraping portions 236.

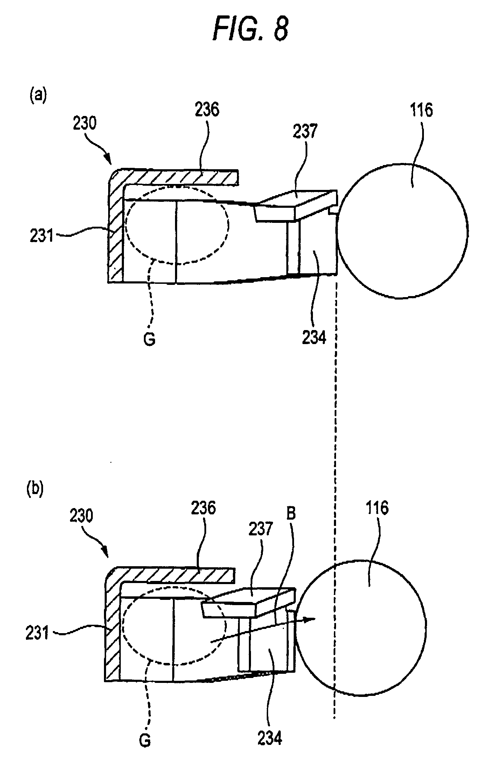

Therefore, as shown in Fig. 8A, due to the grease scraping portion 236 that is bent toward the front of the spring 230, a grease pool G is formed between the grease scraping portion 236 and the base portion 231, thereby grease can be prevented from being scattered around by a centrifugal force. Also, as shown in Fig. 8B, when the rollers 116 are in contact with the contact portions 234 of the spring member 230 and the spring member 230 is thereby deformed in such a manner that it is bent, the grease guide portions 237 approach the grease pool G. Owing to this, grease collecting in the grease pool G can be supplied through the grease guide portions 237 to the rollers 116(see the arrow mark B shown in Fig. 8B), thereby being able to maintain the contact surfaces of the rollers 116 in a good lubrication state. Thus, the durability of the present clutch can be enhanced.
The other structures and operations of the present embodiment are similar to those of the first embodiment.

Although the first and second embodiments have been described heretofore with reference to an example in which the inner peripheral surface of the outer ring of the one-way clutch of a roller type is a cylindrical surface and the outer peripheral surface of the inner ring thereof is a cam surface, there may also be employed a structure in which the inner peripheral surface of the outer ring is a cam surface and the outer peripheral surface of the outer ring is a cylindrical surface. In this case, the protruding portion of the retainer may be mounted on the cam surface of the outer ring, and the retainer and the spring can be rotated with the outer ring. Thus, by providing the grease scraping portion on the base portion so as to protrude inwardly in the radial direction, grease sticking to the outer peripheral surface of the inner ring can be scraped off.

Also, although the first and second embodiments have been described heretofore with reference to an example in which the spring is held by the spring holding portion of the pillar portion in the end portion which are in contact with the end portion of the spring and the spring holding portion thereof in center side, the invention is not limited to this holding structure.

### [Third Embodiment]

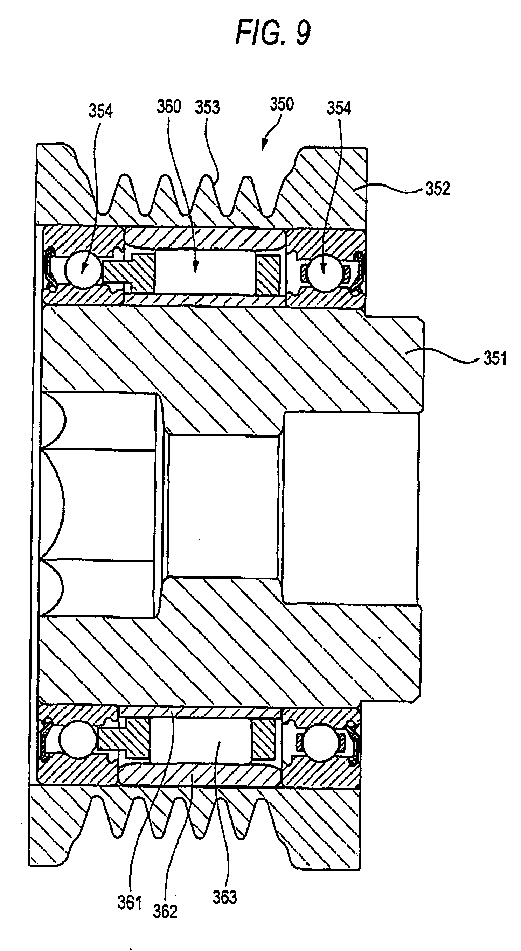

Consequently, a third embodiment will be specifically described with reference to Figs. 9 to 11.
As shown in Fig. 9, a pulley apparatus 350 having a built-in one-way clutch of a sprag type includes: a sleeve 351 which a rotation shaft (not shown) of an auxiliary machine such as an alternator (not shown) is fit into by screwing; and a pulley 352 which is provided on an outside portion of the sleeve 351 in the radial direction and concentrically with the sleeve 351 and has a belt groove 353 formed in the outer peripheral surface thereof. On the belt groove 353, there is disposed a drive belt (not shown) which is hung across a drive pulley (not shown) fixed to a crank shaft of the engine.

Also, between the outer peripheral surface of an intermediate portion of the sleeve 351 in the axial direction and the inner peripheral surface of an intermediate portion of the pulley 352 in the axial direction, a sprag type one-way clutch 360 is interposed. On both sides across the one-way clutch 360 in the axial direction, that is, between the outer peripheral surfaces of both end portions of the sleeve 351 in the axial direction and the inner peripheral surfaces of both end portions of the pulley 352 in the axial direction, a pair of rolling bearings 354 is interposed. In the one-way clutch 360, only when the pulley 352 tends to rotate relative to the sleeve 351 in a given direction, a rotation force between the pulley 352 and sleeve 351 can be transmitted. The rolling bearings 354, while supporting a radial load applied to the pulley 352, allows the relative rotation between the sleeve 351 and pulley 352.

The one-way clutch 360 includes: an inner ring 361 serving as an inner member which is pressed against and fixed to the outer peripheral surface of the sleeve 351; an outer ring 362 serving as an outer member which is pressed against and fixed to the inner peripheral surface of the pulley 352 so as to rotate relative to the inner ring 361; multiple sprags 363 serving as engaging members which are respectively interposed between the outer peripheral surface of the inner ring 361 and the inner peripheral surface of the outer ring 362; a retainer 380 having multiple pockets 381 respectively storing the sprags 363 separately therein; and a spring 370 elastically pressing against the respective sprags 363 in the directions to engage them.

The sprags 363 have a flat surface, a curved surface and cam surfaces. Further, the flat surface is in contact with a spring 370, the curved surface is the opposite side of the flat surface and an intermediate portion thereof in the radial direction is concave toward the flat surface, and the cam surface is both surfaces of the sprags in the radial direction and has an arc-shaped section over the whole axial direction.

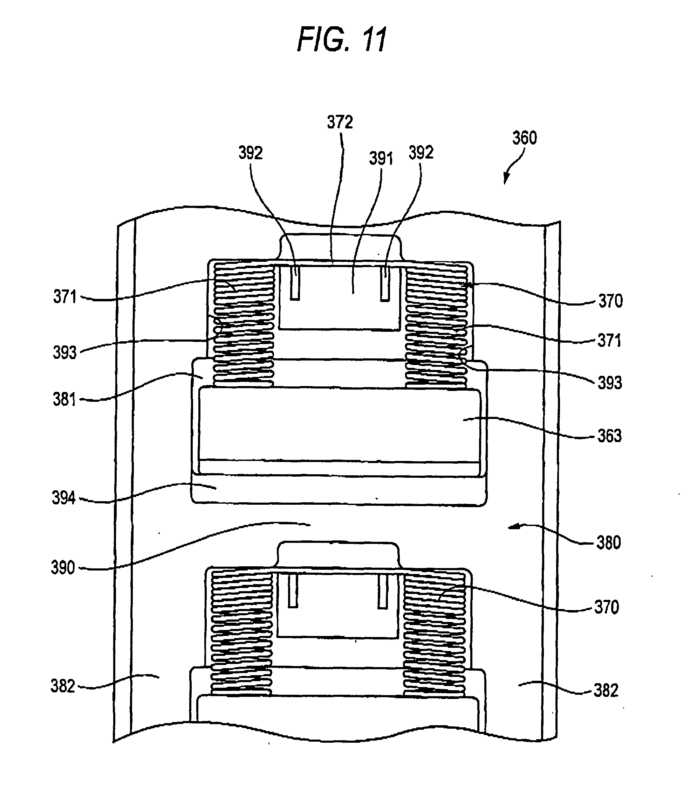

As shown in Fig. 11, the spring 370 is made of a single wire member including two coil portions 371 and 371 formed on both sides thereof.

Also, a retainer 380 includes: a pair of ring portions 382; and multiple pillar portions 390 connecting the pair of ring portions 382.
A space, which is surrounded by the paired ring portions 382 and the pillar portions 390, provides a pocket 381 which is opened in the radial direction and also in which the sprags 363 can be disposed.

The pillar portions 390 respectively include concave portions 393, 393 which face one side surface in the peripheral direction of the pocket 381 and into which the coil spring portions 371, 371 can be stored. These concave portions 393, 393 extend parallel to each other in the peripheral direction of the pocket 381 and are inclined in the inside diameter direction toward the pocket 381 in order that the end faces of the coil spring portions 371, 371 fit the wall surfaces of the sprags 363. Between the concave portions 393, 393, there is interposed a partition wall portion 391 which includes securing portions 392, 392 securing the wire member portion 372 of the spring 370.

Further, the retainer 380 includes a grease scraping portion 394 which scrapes grease sticking to the inner peripheral surface of the outer ring 362 in the over-run state. The grease scraping portion 394 is provided on the opposite side to the side which the spring 370 exists across the sprags 363 in the peripheral direction. Also, a peripheral-direction width of the grease scraping portion 394 has substantially the same of peripheral-direction width of the pocket 381 and the grease scraping portion 394 is provided on the pillar potion 390 so as to protrude in the radial direction along the pocket 381.

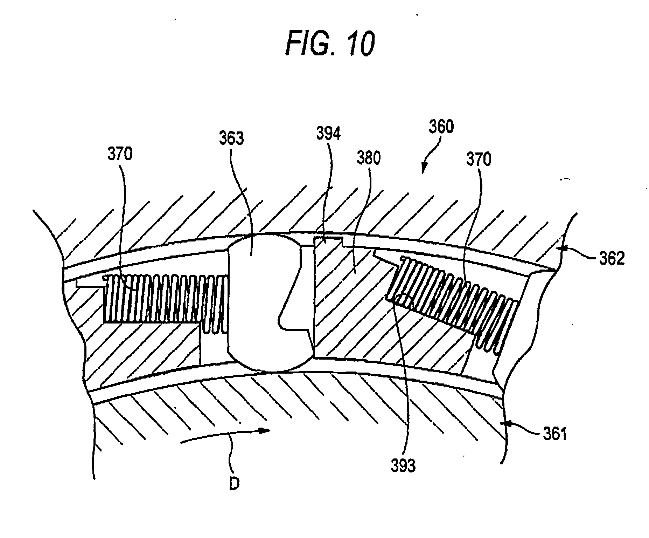

According to the thus structured one-way clutch built-in type pulley apparatus 350, when the rotational angular velocity of the pulley 352 is faster than the rotational angular velocity of the rotation shaft, that is, when the outer ring 362 rotate relative to the inner ring 361 in a given direction, the sprags stand up and are fixed by the outer ring 362 and the inner ring 361. Thus, between the outer ring 362 and the inner ring 361, a rotation force can be transmitted through the sprags 363. As a result of this, there is provided a lock state in which the pulley 352 and sleeve 351 are prevented rotation relative to each other, whereby the rotation force of the engine can be transmitted to the rotation shaft. On the other hand, when the rotational angular velocity of the pulley 352 is slower than the rotational angular velocity of the rotation shaft, that is, when the inner ring 361 is allowed to rotate relative to the outer ring 362 in the direction of the arrow mark D shown in Fig. 10, the lock state of the sprags 363 are removed, thereby an over-run state in which the pulley 352 and sleeve 351 are allowed to rotate relative to each other is provided.

In the over-run state, the inner ring 361 and the outer ring 362 are also allowed to rotate relative to each other. The retainer 380 scrapes grease sticking to the inner peripheral surface of the outer ring 362 by the grease scraping portion 394. That is, in the over-run state, the grease sticking to the inner peripheral surface of the outer ring 362 is prevented from being in contact with the sprags 363 firstly, thereby an amount of grease staying between the sprags 363 and the back surface of the retainer 380 can be reduced. As a result of this, there can be reduced the resistance that blocks the movements of the sprags 363 in the lock state. Thus, the engaging performance of the clutch can be improved.

### [Fourth Embodiment]

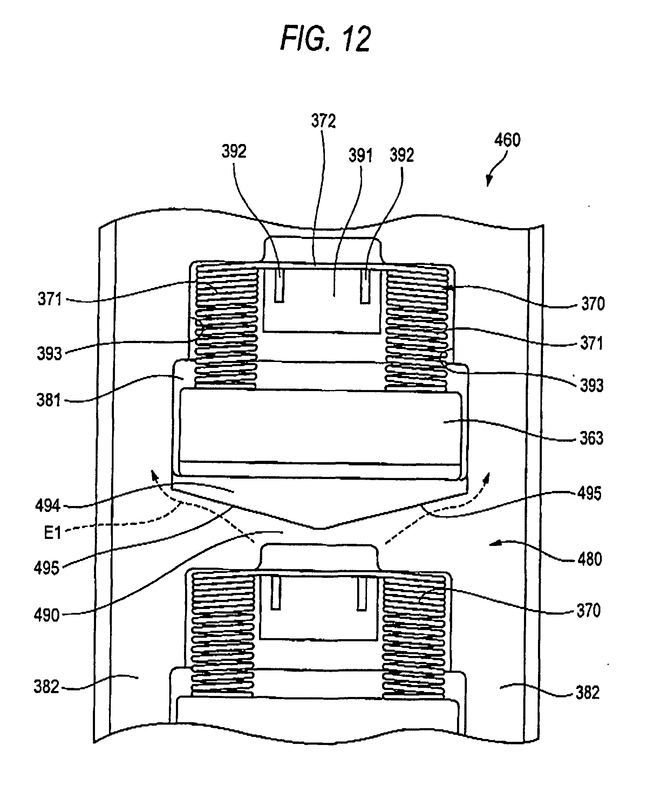

Fig. 12 shows a sprag type one-way clutch 460 according to a fourth embodiment of the invention. Here, the present embodiment is different from the third embodiment only in the shape of a grease scraping portion which is provided in the retainer of the one-way clutch. The other portions of the fourth embodiment are equivalent to those of the third embodiment and thus the description thereof is omitted or simplified here.

According to the present embodiment, a grease scraping portion 494 is structured to have a substantially triangular shape with a protruding center portion of the grease scraping portion in the axial direction. Specifically, the peripheral-direction width of a central portion of the grease scraping portion 494 in the axial direction is largest in width, and the wall surfaces 495 of the grease scraping portion 494 on the opposite side to the pocket 381 are inclined so that the peripheral-direction width of the grease scraping portion decreases as the wall surfaces 495 approaches to both edge sides in the axial direction. Owing to this structure, as the arrow mark E1 shown in Fig. 12, the grease scraped by the grease scraping portion 494 easily flow on an outer peripheral surface of pillar portions 490 toward the both sides in the axial direction. Therefore, even when the amount of grease scraped is large, the scraped grease does not stay in the grease scraping portion 494, thereby grease is scraped by the grease scraping portion 494 all the time.

### [Fifth Embodiment]

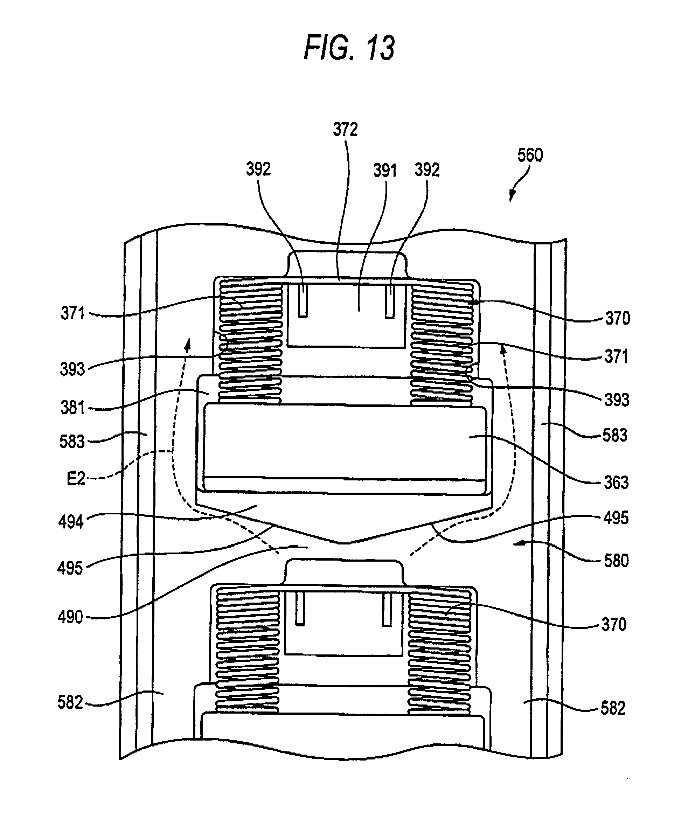

Fig. 13 shows a sprag type one-way clutch 560 according to a fifth embodiment of the invention. In the present embodiment, in addition to the structure of the fourth embodiment, a pair of ring-shaped flange portions 583 is formed on outer portions of the outer peripheral surfaces of a pair of ring-shaped portions 582 in the axial direction, respectively. Owing to this, in addition to the effect of the fourth embodiment, there is further obtained an effect that grease flown by the grease scraping portion 494 to both sides in the axial direction on the outer peripheral surface of the pillar portion 490, as shown by the arrow mark E2, can be prevented from scattering from the outer peripheral surface of the retainer 580 by the ring-shaped flange portions 583, but is allowed to flow on the outer peripheral surface of the ring portions 582.

### [Sixth Embodiment]

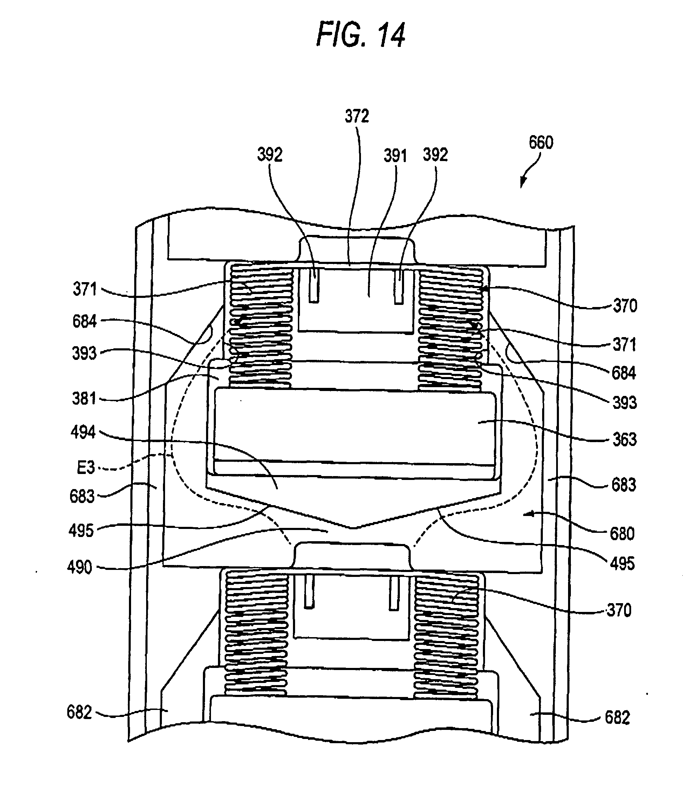

Fig. 14 shows a sprag type one-way clutch 660 according to a sixth embodiment of the invention. The present embodiment is different from the fifth embodiment only in the shape of a ring-shaped flange portion. The other portions of the present embodiment are equivalent to those of the fifth embodiment and thus the description thereof is omitted or simplified here.
According to the present embodiment, a pair of ring-shaped flange portions 683 formed on the outer peripheral surfaces of a pair of ring portions 682 has inclined surfaces 684 which extend obliquely from the inner wall surfaces of the ring-shaped flange portions 683, which exist laterally of the pocket 381 and extend in the peripheral direction, inwardly in the axial direction toward the concave portions 393. Owing to this structure, in addition to the effects of the fifth embodiment, there is further obtained an effect that grease, which has been flown to both sides in the axial direction on the outer peripheral surface of the pillar portion 490 by the grease scraping portion 494 and is allowed to flow on the outer peripheral surface of the ring portion 682, as shown by the arrow mark E3 in Fig. 14, can be guided positively into the interior portion of the one-way clutch 660.

### [Seventh Embodiment]

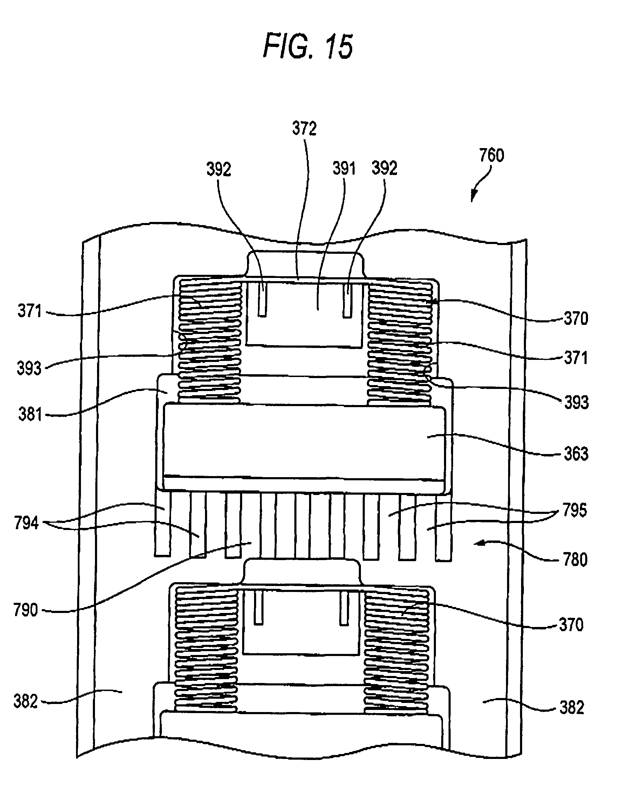

Fig. 15 shows a sprag type one-way clutch 760 according to a seventh embodiment of the invention. The present embodiment is different from the third embodiment only in the shape of a grease scraping portion provided in the retainer of the one-way clutch. The other portions of the present embodiment are equivalent to those of the third embodiment and thus the description thereof is omitted or simplified here.

According to the present embodiment, there are formed multiple grease scraping portions 794. Specifically, the grease scraping portions 794 are provided on the outer peripheral surfaces of pillar portions 790 in such a manner that they extend in the circumferential direction of the pillar portions 790 and are protruded like combs substantially at regular intervals in the axial direction. In this structure, grease, which is low in consistency at low temperatures, is unable to pass through narrow flow channel 795 surrounded by the grease scraping portions 794 and is thereby scraped by the grease scraping portions 794; however, grease, which is high in consistency at high temperatures, is able to pass through these narrow passages 795 and reaches the sprags 363 to thereby lubricate them. Therefore, the durability of the one-way clutch can be maintained properly.
Since the interval between the grease scraping portions 794, that is, the width of the narrow passage 795 varies in the optimum value thereof depending on grease used or the like, the optimum value may be obtained, for example, by conducting tests.

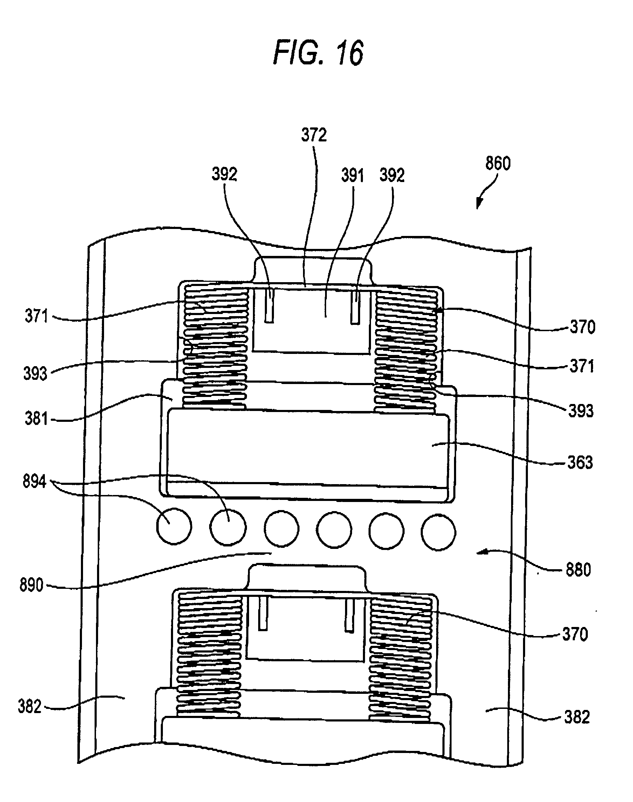

Here, as a modification of the grease scraping portion of the seventh embodiment, in Fig. 16, there is shown a sprag type one-way clutch 860 in which multiple pillar-shaped grease scraping portions 894 are protruded substantially at regular intervals in the axial direction of the one-way clutch 860. This structure can also provide similar effects to the seventh embodiment.

Here, the invention is not limited to the above-mentioned embodiments, but various modifications, improvements or the like are also possible.

In the above-mentioned embodiments, description has been given with reference to an example in which the inner ring of the one-way clutch is pressure inserted into the sleeve. However, the inner ring may also be formed integrally with the sleeve. Also, in the above-mentioned embodiments, although description has been given with reference to an example in which the outer ring of the one-way clutch is pressure inserted into the pulley, the outer ring may also be formed integrally with the pulley. Therefore, the sleeve may be formed as an inner member and the pulley may be formed as an outer member. In the above embodiments, although, for the one-way clutch built-in type pulley apparatus, description has been given with reference to an example in which the pulley apparatus is mounted between the rotation shaft of the alternator and the driven pulley, the pulley apparatus may also be mounted between the pulley of a starter and the rotation shaft thereof. In this case, only when the sleeve tends to rotate relative to the pulley in a given direction, a rotational force can be transmitted between the sleeve and pulley.

## Claims

1. A one-way clutch (110, 360, 460, 560, 660, 760, 860), comprising:
an inner member (111, 361);
an outer member (114, 362) disposed rotatably relative to the inner member (111, 361);
multiple engaging members (116, 363) respectively interposed between an outer peripheral surface of the inner member (111, 361) and an inner peripheral surface of the outer member (114, 362);
a retainer (120, 380, 480, 580, 680, 780, 880) holding the multiple engaging members (116; 363); and
a spring member (130, 230, 370, 930) being secured to the retainer (120, 380, 480, 580, 680, 780, 880) and pressing against the respective engaging members (116, 363) to press the engaging members (116, 363) in a direction in which the engaging members (116, 363) are engaged,
**characterized in that**
the one-way clutch (110, 360, 460, 560, 660, 760, 860) further comprises a grease scraping portion (136, 236, 394, 494, 794, 894, 936) which scrapes grease sticking to the inner peripheral surface of the outer member (114, 362), when the inner member (111, 361) and the outer member (114, 362) are rotated relative to each other.

2. The one-way clutch (110, 360, 460, 560, 660, 760, 860) as set forth in Claim 1, wherein the grease scraping portion (136, 236, 394, 494, 794, 894, 936) is formed on the spring member (130, 230, 370, 930).

3. The one-way clutch (110, 360, 460, 560, 660, 760, 860) as set forth in Claim 2,
wherein the spring member (130, 230, 370, 930) comprises:
a base portion (131, 231, 931) formed on an intermediate part in a longitudinal direction of the spring member (130, 230, 370, 930) and secured to the retainer (120, 380, 480, 580, 680, 780, 880); and
a pair of pressing portions (133, 233) respectively formed on both sides of the spring member (130, 230, 370, 930) in the longitudinal direction and pressing against the multiple engaging members (116, 363) in the direction in which the multiple engaging members (116, 363) are engaged,
the spring member (130, 230, 370, 930) is made of a plate spring, and
the grease scraping portion (136, 236, 394, 494, 794, 894, 936) is formed on the base portion (131, 231, 931) so as to protrude in a radial direction.

4. The one-way clutch (110, 360, 460, 560, 660, 760, 860) as set forth in Claim 1, wherein the grease scraping portion (136, 236, 394, 494, 794, 894, 936) is formed on the retainer (120, 380, 480, 580, 680, 780, 880).

5. The one-way clutch (110, 360, 460, 560, 660, 760, 860) as set forth in Claim 4,
wherein the retainer (120, 380, 480, 580, 680, 780, 880) comprises:
a pair of ring portions (121, 382, 582, 682); and
multiple pillar portions (122, 390, 490, 790, 890) which connect the pair of ring portions (121, 382, 582, 682) and which are secured to the spring member (130, 230, 370, 930), and
the grease scraping portion (136, 236, 394, 494, 794, 894, 936) is formed on an outer peripheral surfaces of the pillar portions (122, 390, 490, 790, 890) so as to protrude in the radial direction.

6. A one-way clutch built-in pulley apparatus (100, 350) comprising:
a sleeve (101, 351) in which to insert a rotation shaft; a pulley (102, 352) disposed concentrically with the sleeve (101, 351) and outward of the sleeve (101, 351) and; a one way clutch (110, 360, 460, 560, 660, 760, 860) as set forth in any one of Claims 1 to 5, which is interposed between an outer peripheral surface of the sleeve (101,351) and an inner peripheral surface of the pulley (102, 352), and which transmits a rotation force between the pulley (102, 352) and the sleeve (101, 351) when one of the pulley (102, 352) and the sleeve (101, 351) rotates relative to the other; and
a support bearing (104, 354) which is interposed between the outer peripheral surface of the sleeve (101, 351) and the inner peripheral surface of the pulley (102, 352) at a position axially spaced from the one-way clutch (110, 360, 460, 560, 660, 760, 860), for allowing relative rotation between the pulley (102, 352) and the sleeve (101, 351) while supporting a radial load applied to the pulley (102, 352).

## Patentansprüche

1. Einwegkupplung (110, 360, 460, 560, 660, 760, 860), die umfasst:
ein Innenglied (111, 361),
ein Außenglied (114, 362), das drehbar relativ zu dem Innenglied (111, 361) angeordnet ist,
mehrere Eingreifglieder (116, 363), die jeweils zwischen einer Außenumfangsfläche des Innenglieds (111, 361) und einer Innenumfangsfläche des Außenglieds (114, 362) angeordnet sind,
einen Halter (120, 380, 480, 580, 680, 780, 880), der die mehreren Eingreifglieder (116, 363) hält, und
ein Federglied (130, 230, 370, 930), das an dem Halter (120, 380, 480, 580, 680, 780, 880) befestigt ist und gegen die entsprechenden Eingreifglieder (116, 363) drückt, um die Eingreifglieder (116, 363) in einer Richtung zu drücken, in welcher die Eingreifglieder (116, 363) eingreifen,
**dadurch gekennzeichnet, dass**
die Einwegkupplung (110, 360, 460, 560, 660, 760, 860) weiterhin einen Fettschabteil (136, 236, 394, 494, 794, 894, 936) umfasst, der an der Innenumfangsfläche des Außenglieds (114, 362) klebendes Fett abschabt, wenn das Innenglied (111, 361) und das Außenglied (114, 362) relativ zueinander gedreht werden.

2. Einwegkupplung (110, 360, 460, 560, 660, 760, 860) nach Anspruch 1, wobei der Fettschabteil (136, 236, 394, 494, 794, 894, 936) an dem Federglied (130, 230, 370, 930) ausgebildet ist.

3. Einwegkupplung (110, 360, 460, 560, 660, 760, 860) nach Anspruch 2, wobei das Federglied (130, 230, 370, 930) umfasst:
einen Basisteil (131, 231, 931), der an einem mittleren Teil in einer Längsrichtung des Federglieds (130, 230, 370, 930) ausgebildet ist und an dem Halter (120, 380, 480, 580, 680, 780, 880) befestigt ist, und
ein Paar von Drückteilen (133, 233), die jeweils auf beiden Seiten des Federglieds (130, 230, 370, 930) in der Längsrichtung ausgebildet sind und gegen die mehreren Eingreifglieder (116, 363) in der Richtung drücken, in der die mehreren Eingreifglieder (116, 363) eingreifen,
wobei das Federglied (130, 230, 370, 930) aus einer Tellerfeder ausgebildet ist, und
wobei der Fettschabteil (136, 236, 394, 494, 794, 894, 936) an dem Basisteil (131, 231, 931) derart ausgebildet ist, dass er in einer Radialrichtung vorsteht.

4. Einwegkupplung (110, 360, 460, 560, 660, 760, 860) nach Anspruch 1, wobei der Fettschabteil (136, 236, 394, 494, 794, 894, 936) an dem Halter (120, 380, 480, 580, 680, 780, 880) ausgebildet ist.

5. Einwegkupplung (110, 360, 460, 560, 660, 760, 860) nach Anspruch 4, wobei der Halter (120, 380, 480, 580, 680, 780, 880) umfasst:
ein Paar von Ringteilen (121, 382, 582, 682), und
mehrere Säulenteile (122, 390, 490, 790, 890), die das Paar von Ringteilen (121, 382, 582, 682) miteinander verbinden und an dem Federglied (130, 230, 370, 930) befestigt sind,
wobei der Fettschabteil (136, 236, 394, 494, 794, 894, 936) an Außenumfangsflächen der Säulenteile (122, 390, 490, 790, 890) derart ausgebildet ist, dass er in der Radialrichtung vorsteht.

6. Mit einer eingebauten Einwegkupplung versehene Scheibenvorrichtung (100, 350), die umfasst:
eine Hülse (101, 351), in die eine Drehwelle einzustecken ist,
eine Scheibe (102, 352), die konzentrisch mit der Hülse (101, 351) und außerhalb der Hülse (101, 351) angeordnet ist,
eine Einwegkupplung (110, 360, 460, 560, 660, 760, 860) nach einem der Ansprüche 1 bis 5, die zwischen einer Außenumfangsfläche der Hülse (101, 351) und einer Innenumfangsfläche der Scheibe (102, 352) angeordnet ist und eine Drehkraft zwischen der Scheibe (102, 352) und der Hülse (101, 351) überträgt, wenn die Scheibe (102, 352) und die Hülse (101, 351) relativ zueinander gedreht werden, und
ein Haltelager (104, 354), das zwischen der Außenumfangsfläche der Hülse (101, 351) und der Innenumfangsfläche der Scheibe (102, 352) an einer axial von der Einwegkupplung (110, 360, 460, 560, 660, 760, 860) beabstandeten Position angeordnet ist, um eine relative Drehung zwischen der Scheibe (102, 352) und der Hülse (101, 351) zu gestatten und gleichzeitig eine auf die Scheibe (102, 352) ausgeübte Radiallast zu halten.

## Revendications

1. Embrayage unidirectionnel (110, 360, 460, 560, 660, 760, 860) comprenant :
un élément interne (111, 361) ;
un élément externe (114, 362) disposé de manière rotative par rapport à l'élément interne (111, 361) ;
plusieurs éléments d'engagement (116, 363) respectivement intercalés entre la surface périphérique externe de l'élément interne (111, 361) et la surface périphérique interne de l'élément externe (114, 362) ;
un élément de retenue (120, 380, 480, 580, 680, 780, 880) maintenant les différents éléments d'engagement (116, 363) ; et
un élément à ressort (130, 230, 370, 930) fixé à l'élément de retenue (120, 380, 480, 580, 680, 780, 880) et exerçant une pression contre les éléments d'engagement respectifs (116, 363) pour pousser les éléments d'engagement (116, 363) dans une direction dans laquelle les éléments d'engagement (116, 363) sont en prise,
**caractérisé en ce que**
l'embrayage unidirectionnel (110, 360, 460, 560, 660, 760, 860) comprend en outre une partie de raclage de graisse (136, 236, 394, 494, 794, 894, 936) qui racle la graisse collée sur la surface périphérique interne de l'élément externe (114, 362), lorsqu'on fait tourner l'élément interne (111, 361) et l'élément externe (114, 362) l'un par rapport à l'autre.

2. Embrayage unidirectionnel (110, 360, 460, 560, 660, 760, 860) selon la revendication 1, dans lequel la partie de raclage de graisse (136, 236, 394, 494, 794, 894, 936) est formée sur l'élément à ressort (130, 230, 370, 930).

3. Embrayage unidirectionnel (110, 360, 460, 560, 660, 760, 860) selon la revendication 2, dans lequel l'élément à ressort (130, 230, 370, 930) comprend :
une partie de base (131, 231, 931) formée sur une partie intermédiaire dans la direction longitudinale de l'élément à ressort (130, 230, 370, 930) et fixée à l'élément de retenue (120, 380, 480, 580, 680, 780, 880) ; et
une paire de parties de pression (133, 233) respectivement formées sur les deux côtés de l'élément à ressort (130, 230, 370, 930) dans la direction longitudinale et exerçant une pression contre les différents éléments d'engagement (116, 363) dans la direction dans laquelle les différents éléments d'engagement (116, 363) sont en prise,
l'élément à ressort (130, 230, 370, 930) est fait d'un ressort à lames, et
la partie de raclage de graisse (136, 236, 394, 494, 794, 894, 936) est formée sur la partie de base (131, 231, 931) de manière à faire saillie dans la direction radiale.

4. Embrayage unidirectionnel (110, 360, 460, 560, 660, 760, 860) selon la revendication 1, dans lequel la partie de raclage de graisse (136, 236, 394, 494, 794, 894, 936) est formée sur l'élément de retenue (120, 380, 480, 580, 680, 780, 880).

5. Embrayage unidirectionnel (110, 360, 460, 560, 660, 760, 860) selon la revendication 4, dans lequel l'élément de retenue (120, 380, 480, 580, 680, 780, 880) comprend :
une paire de parties en anneau (121, 382, 582, 682) ; et
plusieurs parties de pilier (122, 390, 490, 790, 890) qui relient les deux parties en anneau (121, 382, 582, 682) et qui sont fixées à l'élément à ressort (130, 230, 370, 930), et
la partie de raclage de graisse (136, 236, 394, 494, 794, 894, 936) est formée sur les surfaces périphériques externes des parties de pilier (122, 390, 490, 790, 890) de façon à faire saillie dans la direction radiale.

6. Appareil à poulie intégrant un embrayage unidirectionnel (100, 350) comprenant :
un manchon (101, 351) dans lequel on insère un arbre de rotation ; une poulie (102, 352) disposés de manière concentrique avec le manchon (101, 351) et vers l'extérieur du manchon (101, 351) ; et un embrayage unidirectionnel (110, 360, 460, 560, 660, 760, 860) selon l'une quelconque des revendications 1 à 5, qui est intercalé entre la surface périphérique externe du manchon (101, 351) et la surface périphérique interne de la poulie (102, 352) et qui transmet une force de rotation entre la poulie (102, 352) et le manchon (101, 351) lorsqu'un élément parmi la poulie (102, 352) et le manchon (101, 351) tourne par rapport à l'autre ; et
un palier support (104, 354) qui est intercalé entre la surface périphérique externe du manchon (101, 351) et la surface périphérique interne de la poulie (102, 352) dans une position espacée axialement de l'embrayage unidirectionnel (110, 360, 460, 560, 660, 760, 860) pour permettre une rotation relative entre la poulie (102, 352) et le manchon (101, 351) en supportant une charge radiale appliquée à la poulie (102, 352).
